(19) Europäisches Patentamt / European Patent Office / Office européen des brevets

(11) **EP 4 113 823 A1**

(12) **DEMANDE DE BREVET EUROPEEN**

(43) Date de publication:
**04.01.2023 Bulletin 2023/01**

(21) Numéro de dépôt: **22182385.9**

(22) Date de dépôt: **30.06.2022**

(51) Classification Internationale des Brevets (IPC):
*H02P 8/12* (2006.01)     *H02P 8/20* (2006.01)
*H02P 8/34* (2006.01)     *H02P 11/00* (2006.01)
*H02P 21/22* (2016.01)     *H02P 25/026* (2016.01)
*H02P 27/06* (2006.01)

(52) Classification Coopérative des Brevets (CPC):
**H02P 8/12; H02P 8/20; H02P 8/34; H02P 11/00;
H02P 21/22; H02P 25/026; H02P 27/06**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **02.07.2021 FR 2107214**

(71) Demandeur: **VALEO EQUIPEMENTS
ELECTRIQUES MOTEUR
94046 Créteil Cedex (FR)**

(72) Inventeurs:
• **CHASSARD, Pierre
94046 CRETEIL CEDEX (FR)**
• **BERNARD, François Xavier
94046 CRETEIL CEDEX (FR)**

(74) Mandataire: **Valeo Powertrain Systems
Service Propriété Intellectuelle
Immeuble le Delta
14, avenue des Béguines
95892 Cergy Pontoise (FR)**

(54) **CONVERTISSEUR DE TENSION POUR UNE MACHINE ÉLECTRIQUE TOURNANTE**

(57) La présente invention propose un convertisseur de tension (1) comprenant un module de commande (2) adapté pour fournir un signal de contrôle (20) et un module de puissance (3) adapté pour recevoir le signal de contrôle (20) et piloter des phases d'un bobinage, un terminal d'alimentation (11) destiné à être connecté à une batterie du véhicule, le convertisseur de tension (1) comprenant également un moyen (4) adapté pour déterminer un courant d'alimentation (Idc) aux bornes du terminal d'alimentation (11) dudit convertisseur de tension, le module de commande (2) comprenant un module de calcul (5) adapté pour établir une consigne de courant (Idc*) en fonction d'une consigne de couple (Torque*), le module de commande (2) comprenant également un module de régulation stator (6) adapté pour générer le signal de contrôle (20) du module de puissance en fonction du courant d'alimentation (Idc) et de la consigne de courant (Idc*).

[Fig. 2]

EP 4 113 823 A1

**Description**

L'invention concerne un convertisseur de tension et trouve une application particulièrement avantageuse dans le domaine des machines électriques tournantes telles que les alternateurs, les alterno-démarreurs ou encore les machines réversibles ou les moteurs électriques. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule tel qu'un véhicule automobile.

Une machine électrique tournante comprend un rotor mobile en rotation autour d'un axe et un stator fixe. En mode alternateur, lorsque le rotor est en rotation, il induit un champ magnétique au stator qui le transforme en courant électrique afin d'alimenter les consommateurs électriques du véhicule et de recharger la batterie. En mode moteur, le stator est alimenté électriquement et induit un champ magnétique entraînant le rotor en rotation par exemple pour démarrer le moteur thermique.

Classiquement, la machine comprend un module de commande permettant de générer des consignes de commande du rotor et du stator pour contrôler la puissance et/ou le couple fournis par la machine. La machine comprend également un module de puissance adapté notamment pour fournir le signal électrique de puissance aux phases électrique du bobinage en fonction de la consigne de commande stator. Chacune de ces commandes est déterminée d'une part en fonction de paramètres de référence, notamment donnés par le calculateur global du véhicule indiquant le niveau de fonctionnement souhaité pour la machine, et d'autre part en fonction de paramètres instantanés de fonctionnement de la machine.

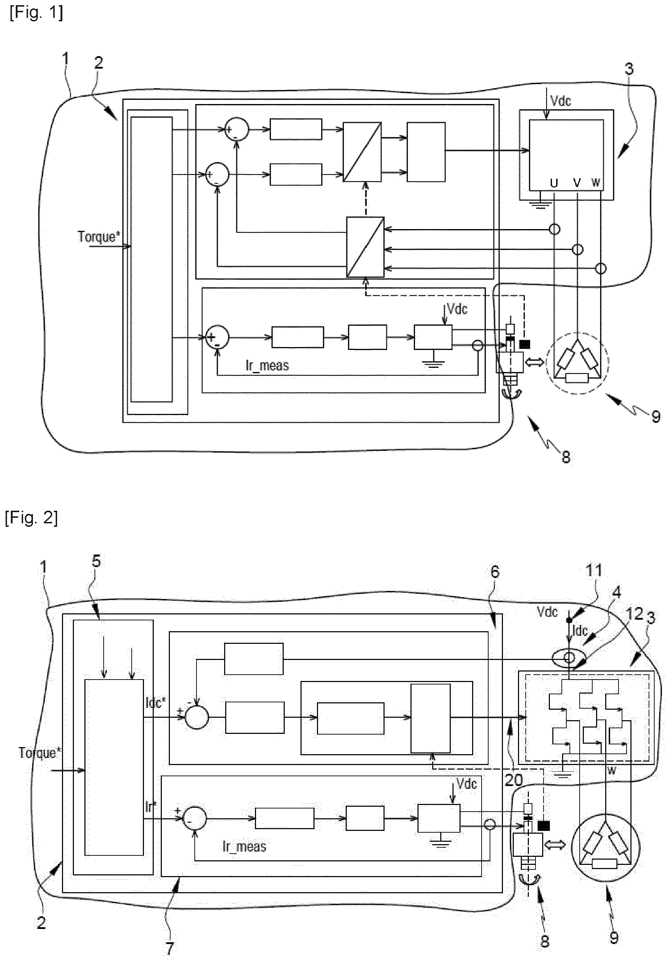

Les paramètres instantanés sont par exemple les courants de phase qui alimentent le stator, détectés par trois capteurs de courant positionnés respectivement sur chacune des trois phases en entrée du bobinage, comme dans l'art antérieur illustré à la [Fig. 1]. Cependant les trois capteurs doivent être positionnés en tenant compte des problèmes d'encombrement en entrée du bobinage.

Pour diminuer l'encombrement et pour limiter les coûts, on peut avantageusement déterminer les paramètres instantanés en utilisant trois capteurs positionnés dans le module de puissance de sorte à détecter le courant de chacune des phases. Cependant, lors du fonctionnement en mode pleine onde notamment, de tels capteurs ne permettent pas de mesurer les courants des trois phases simultanément pour effectuer une transformation de Park afin de déterminer les paramètres instantanés. Il est donc nécessaire de proposer une solution pour déterminer les paramètres instantanés en mode pleine onde.

L'invention propose un convertisseur de tension comprenant un module de commande adapté pour fournir un signal de contrôle et un module de puissance adapté pour recevoir le signal de contrôle et piloter des phases d'un bobinage, un terminal d'alimentation destiné à être connecté à une batterie du véhicule, le convertisseur de tension comprenant également un moyen adapté pour déterminer un courant d'alimentation aux bornes du terminal d'alimentation dudit convertisseur de tension, le module de commande comprenant un module de calcul adapté pour établir une consigne de courant en fonction d'une consigne de couple, le module de commande comprenant également un module de régulation stator adapté pour générer le signal de contrôle du module de puissance en fonction du courant d'alimentation et de la consigne de courant.

L'invention propose donc l'utilisation d'un moyen de détection de courant en entrée du convertisseur de tension. Le module de régulation stator régule la commande stator en fonction du courant détecté ainsi que d'une valeur de courant consigne issue d'un bilan de puissance, quel que soit le mode de fonctionnement de la machine et notamment en mode pleine onde. Une telle solution réduit l'encombrement et le coût du convertisseur de tension tout en étant adapté au mode pleine onde.

Selon une réalisation, le convertisseur comprend un unique moyen adapté pour déterminer le courant d'alimentation Idc.

Selon une réalisation, le moyen comprend un capteur de courant placé entre le terminal d'alimentation dudit convertisseur de tension et une borne d'alimentation du module de puissance.

Selon une réalisation le capteur de courant est l'un parmi un capteur de courant à effet hall ou une résistance ou un capteur de courant magnéto-résistif.

Selon une réalisation le module de calcul est adapté pour établir la consigne de courant en fonction d'un bilan de puissance entre une puissance électrique de référence donnée par la multiplication du courant de consigne par la tension d'alimentation mesurée aux bornes du terminal d'alimentation du convertisseur de tension Pelec* = Vdc x Idc*, une puissance mécanique de référence donnée par la multiplication de la consigne de couple par la vitesse de rotation angulaire mécanique du rotor Pméca* = T* x w.

Selon une réalisation la vitesse de rotation angulaire est supérieure à 4000 RPM.

Selon une réalisation le module de régulation stator comprend un filtre passe bas adapté pour filtrer le courant d'alimentation mesuré.

Selon une réalisation le module de régulation comprend un comparateur adapté pour fournir un signal d'erreur correspondant à la différence entre le courant d'alimentation et la consigne de courant.

Selon une réalisation le module de régulation stator comprend un module de mise en forme adapté pour fonctionner dans un mode pleine onde.

La présente invention a également pour objet une machine électrique tournante pour véhicule automobile comprenant un stator comprenant un bobinage formant au moins une phase et un convertisseur de tension.

La [Fig. 1] représente un schéma bloc d'une machine selon l'art antérieur.
La [Fig. 2] représente un schéma bloc d'une machine selon l'invention.
La [Fig. 3] détaille les composants des différents blocs du schéma de la machine selon l'invention.

Les éléments identiques, similaires ou analogues conservent les mêmes références d'une figure à l'autre. De plus, les exemples de réalisation qui sont décrits dans la suite ne sont nullement limitatifs. On pourra notamment imaginer des variantes de l'invention ne comprenant qu'une sélection de caractéristiques décrites par la suite isolées des autres caractéristiques décrites.

Une machine électrique tournante 10, notamment pour véhicule tel qu'un véhicule automobile ou un drone, transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur, une machine réversible ou un moteur électrique. La machine électrique tournante comprend un rotor mobile en rotation autour d'un axe et un stator fixe.

Le stator 9 comporte un corps, par exemple formé d'un paquet de tôles doté d'encoches, et un bobinage électrique monté dans le corps. Le bobinage électrique est formé d'une ou plusieurs phases comportant au moins un conducteur électrique. Chaque phase comporte une extrémité formant une sortie de phase qui est connectée électriquement au module de puissance 3. Le module de puissance 3 permet de recevoir ou de fournir un signal électrique de puissance aux phases électrique du bobinage. Le module de puissance 3 forme un pont redresseur de tension pour transformer la tension alternative générée par les phases du stator en une tension continue et/ou, à l'inverse, pour transformer une tension continue en une tension alternative pour alimenter les phases du stator. Le module de commande 2, à l'interface avec un calculateur externe de contrôle global du véhicule, fournit au module de puissance 3 un signal de contrôle 20 pour réguler la tension du stator en fonction des besoins pour la machine.

Le rotor 8 est un rotor à griffe comportant, ici, deux roues polaires et une bobine enroulée autour d'un noyau des roues polaires. Par exemple, la machine comporte un collecteur monté sur le rotor et comporte des bagues collectrices reliées par des liaisons filaires à la bobine et un porte-balais disposé de façon à ce que des balais frottent sur les bagues collectrices pour alimenter électriquement la bobine du rotor. Les balais du porte-balais sont connectés électriquement au module de commande 2. Le module de commande 2 permet de commander également l'alimentation électrique du rotor en fonction des besoins pour la machine.

L'ensemble de l'étage de contrôle comprenant le module de commande 2, et de l'étage de puissance comprenant le module de puissance 3 forme le convertisseur de tension 1 schématisé à la [Fig. 2]. La machine peut comporter un boitier logeant le rotor et le stator et sur lequel peut être monté ce convertisseur de tension 1. Le convertisseur de tension comprend également un terminal d'alimentation 11 connecté à la batterie du véhicule.

Le convertisseur de tension 1 comprend également un capteur de courant 4, placé entre le terminal d'alimentation du convertisseur de tension 11 et une borne d'alimentation 12 du module de puissance. Le capteur de courant 4 détecte le courant d'alimentation Idc aux bornes du convertisseur de puissance.

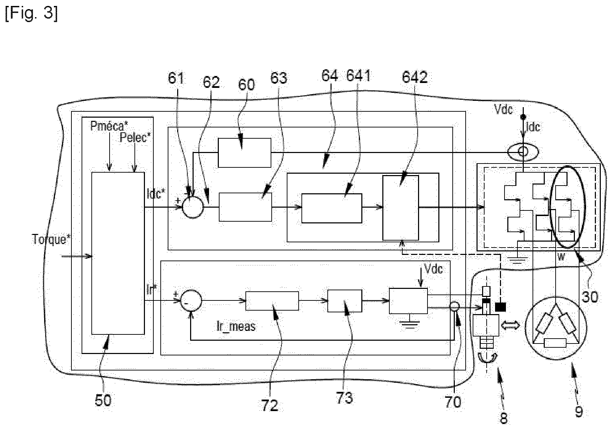

Le module de puissance 3 détaillé à la [Fig. 3] comprend au moins un bras de commutation pour chaque phase de bobinage. Le convertisseur de tension comprend donc typiquement trois bras de commutation pour un système triphasé. Chaque bras de commutation comprend une borne de masse connectée électriquement à la borne de masse électrique GND du réseau électrique, une borne d'alimentation connectée électriquement à une borne positive B+ du réseau électrique, un premier et un deuxième composant de puissance une borne de phase agencée entre le premier composant de puissance et le deuxième composant de puissance et connectée électriquement à une phase électrique. Le premier composant de puissance est agencé entre la borne d'alimentation et la borne de phase et le deuxième composant de puissance est agencé entre la borne de masse et ladite borne de phase. Chaque composant de puissance fonctionne comme un interrupteur agencé pour commuter entre un état bloqué et un état passant. Dans l'état bloqué, l'interrupteur est ouvert et le courant électrique ne circule pas à travers le composant. Dans l'état passant, l'interrupteur est fermé et le courant électrique circule à travers le composant. Chaque composant de puissance comprend une borne de commande connectée au module de contrôle du composant de puissance et permettant de piloter ledit composant entre l'état passant et l'état bloqué. Dans cet exemple, chaque composant de puissance est un transistor, notamment du type MOSFET.

Le module de commande 2 permettant de contrôler le module de puissance comporte un module de régulation stator 6 ainsi qu'un module de calcul 5.

Le module de calcul établit une consigne de courant Idc*, en fonction d'une consigne de référence du calculateur global du véhicule, telle que le couple Torque* souhaité pour la machine. La consigne de courant Idc* est envoyée au module de régulation stator 6.

Le module de régulation stator 6 reçoit également en entrée le courant d'alimentation Idc détecté et génère un signal de contrôle du module de puissance 20 en fonction des courants Idc et Idc*.

Plus précisément dans le module de régulation stator 6, la valeur du courant d'alimentation détecté Idc fournie est éventuellement filtrée, par exemple moyennée, par un filtre passe bas 60, avant d'être comparée à la consigne de courant Idc* par un comparateur 61 du module de régulation stator 6. Le comparateur 61 génère un signal d'erreur 62 correspondant à la différence entre le courant d'alimentation Idc et la consigne de courant Idc*. Le signal d'erreur est ensuite transformé en une tension d'erreur par un correcteur 63 du module de régulation. La tension d'erreur est envoyée à un module de transformation 64 du module de régulation. Le module de transformation 64 effectue une transformation de Park.

Le module de transformation 64 comprend un premier composant 641 capable de calculer un angle d'avance □ en fonction de la tension d'erreur. Le module de transformation comprend également un deuxième composant 642 utilisant également comme donnée d'entrée la position rotor. Le deuxième composant 642 est capable de calculer les rapports cycliques des signaux appliqués aux bornes des phases du stator, en fonction de la position rotor et de l'angle d'avance $\delta$. Le module de transformation 64 est adapté pour fonctionner dans un mode pleine onde.

Le module de transformation 64 délivre en sortie le signal de contrôle 20 pour chaque bras de commutation 30 du module de puissance, de rapport cyclique respectivement U, V, W. Le signal de contrôle 20 a par exemple la forme d'une tension créneau qui est appliquée au transistor du bras de pont 30 pour le commander et ainsi piloter la phase du bobinage.

Plus spécifiquement le module de calcul 5 du module de commande comprend un calculateur 50 adapté pour effectuer un bilan de puissance entre:

- la puissance mécanique de référence (Pméca*) correspondant à la consigne de couple (Torque*) qui est donnée par la multiplication de la consigne de couple (Torque*) par la vitesse de rotation angulaire mécanique du rotor (w) (en rad/s):

$$\text{Pméca*} = \text{Torque*} \times w$$

- la puissance électrique de référence (Pelec*) correspondant à la consigne de courant (Idc*) qui est donnée par la multiplication du courant de consigne (Idc*) par la tension d'alimentation (Vdc) mesurée aux bornes du terminal d'alimentation du convertisseur de tension (en Volts):

$$\text{Pelec*} = \text{Idc*} \times \text{Vdc}$$

- les pertes électriques qui sont :

les pertes joules au stator Pstator,
les pertes joules au rotor Protor,
les pertes joules au convertisseur Pconvertisseur,
les pertes mécaniques de couple par frottements qui sont données par la multiplication du couple perdu par frottements Tperdu avec la vitesse de rotation angulaire mécanique du rotor w : Pperdu = Tperdu x w

Le bilan de puissance est donné par l'équation :

$$\text{Pelec*} = \text{Pméca*} - \text{Pperdu} + \text{Pstator} + \text{Pconvertisseur} + \text{Protor}$$

$$\text{Idc*} \times \text{Vdc} = (\text{Torque*}-\text{Tperdu}) \times w + \text{Pstator} + \text{Pconvertisseur} + \text{Protor}$$

La boucle de position rotor utilisée par le second composant 642 fournit également la vitesse de rotation du rotor.

Le module de commande 2 comprend également un module de régulation rotor 7. Le module de régulation rotor 7 génère une consigne de commande 2 de l'excitation rotor en fonction de la mesure du courant d'excitation rotor Ir_meas et du courant d'excitation de référence rotor Ir* souhaité pour la machine. Un capteur de courant 70 placé entre le module de régulation rotor et le rotor permet de détecter le courant d'excitation du rotor Ir_meas. Le courant d'excitation de référence Ir* est calculé par le module de calcul 50 pour un besoin en fonctionnement spécifique du véhicule. Le module de régulation rotor comprend un comparateur 71 pour établir un signal d'erreur entre le courant consigne Ir* et le courant mesuré Ir, un correcteur 72 pour transformer le courant d'erreur en tension, et un modulateur 73. Une commande sous forme de tension est donc envoyée au rotor en sortie du module de régulation pour réguler le courant d'excitation du rotor.

La vitesse de rotation angulaire mécanique du rotor w est avantageusement supérieure à 4000RPM et notamment entre 4000RPM et 6000RPM, ce qui correspond à un passage en mode « pleine onde ». Le mode pleine onde permet d'appliquer la tension maximale sur le stator afin d'avoir la possibilité d'obtenir la puissance maximale de la machine. On note que la vitesse angulaire est en rad/s peut se convertir en rotation par minute, on parle alors de vitesse de rotation du rotor en N (en RPM); N = w*60/(2*pi).

En variante le capteur de courant 4 est un capteur de courant à effet hall associé avec un concentrateur magnétique. En variante le capteur de courant est de type résistance « shunt » associé avec un amplificateur différentiel de mesure de la tension shunt, représentative du courant mesuré. En variante le capteur de courant est un capteur de courant magnéto-résistif.

**Revendications**

1. Convertisseur de tension (1) comprenant :

   - un module de commande (2) adapté pour fournir un signal de contrôle (20) et
   - un module de puissance (3) adapté pour recevoir le signal de contrôle (20) et piloter des phases d'un bobinage
   - un terminal d'alimentation (11) du convertisseur de tension destiné à être connecté à une batterie du véhicule,

      le convertisseur de tension (1) comprenant également un moyen (4) placé entre le terminal d'alimentation (11) dudit convertisseur de tension et une borne d'alimentation du module de puissance (12), le moyen étant adapté pour déterminer un courant d'alimentation (Idc) sortant du terminal d'alimentation (11) dudit convertisseur de tension,
      le module de commande (2) comprenant un module de calcul (5) adapté pour établir une consigne de courant (Idc*) en fonction d'une consigne de couple (Torque*),
      le module de commande (2) comprenant également un module de régulation stator (6) adapté pour générer le signal de contrôle (20) du module de puissance en fonction du courant d'alimentation (Idc) et de la consigne de courant (Idc*).

2. Convertisseur de tension (1) selon la revendication 1 dans lequel le moyen (4) comprend un capteur de courant placé entre le terminal d'alimentation (11) dudit convertisseur de tension et une borne d'alimentation du module de puissance (12).

3. Convertisseur de tension (1) selon la revendication 2 comprenant un unique capteur de courant (4) adapté pour déterminer le courant d'alimentation (Idc).

4. Convertisseur de tension (1) selon la revendication 3 dans lequel le capteur de courant (4) est l'un parmi un capteur de courant à effet hall ou une résistance ou un capteur de courant magnéto-résistif.

5. Convertisseur de tension (1) selon l'une des revendications 1 à 4 dans lequel le module de calcul (5) est adapté pour établir la consigne de courant (Idc*) en fonction d'un bilan de puissance entre :

   - une puissance électrique de référence (Pelec*) donnée par la multiplication du courant de consigne (Idc*) par la tension d'alimentation (Vdc) mesurée aux bornes du terminal d'alimentation du convertisseur de tension:

$$Pelec^* = Vdc \times Idc^*,$$

   - une puissance mécanique de référence (Pméca*) donnée par la multiplication de la consigne de couple (Torque*) par la vitesse de rotation angulaire mécanique du rotor (w):

$$Pm\acute{e}ca^* = T^* \times w.$$

**6.** Convertisseur de tension selon l'une des revendications 1 à 5 dans lequel la vitesse de rotation angulaire (w) est supérieure à 4000 RPM.

**7.** Convertisseur de tension selon l'une quelconque des revendications 1 à 6 dans lequel le module de régulation stator (6) comprend un filtre passe bas (60) adapté pour filtrer le courant d'alimentation (Idc) mesuré.

**8.** Convertisseur de tension selon l'une quelconque des revendications 1 à 7 dans lequel le module de régulation comprend un comparateur (61) adapté pour fournir un signal d'erreur (62) correspondant à la différence entre le courant d'alimentation (Idc) et la consigne de courant (Idc*).

**9.** Convertisseur de tension selon l'une quelconque des revendications 1 à 8 dans lequel le module de régulation stator (6) comprend un module de mise en forme (64) adapté pour fonctionner dans un mode pleine onde.

**10.** Machine électrique tournante pour véhicule automobile comprenant un stator (12) comprenant un bobinage formant au moins une phase et un convertisseur de tension (1) selon l'une des revendications 1 à 9.

[Fig. 1]

[Fig. 2]

[Fig. 3]

EP 4 113 823 A1

Europäisches
Patentamt

European
Patent Office

Office européen
des brevets

**RAPPORT DE RECHERCHE EUROPEENNE**

Numéro de la demande

**EP 22 18 2385**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 5 635032 B2 (HITACHI LTD) 3 décembre 2014 (2014-12-03) | 1-4,6,7 | INV. H02P8/12 |
| Y | * alinéa [0014] – alinéa [0021]; figures 1, 5 * * alinéa [0038] * * alinéa [0047] * | 5,8-10 | H02P8/20 H02P8/34 H02P11/00 H02P21/22 H02P25/026 H02P27/06 |
| Y | FR 2 911 698 A1 (AIRBUS FRANCE SAS [FR]) 25 juillet 2008 (2008-07-25) * page 14, ligne 3 – ligne 13; figure 6 * | 5 | |
| Y | CN 102 255 529 A (UNIV HUNAN) 23 novembre 2011 (2011-11-23) * alinéa [0001] – alinéa [0079]; figure 1 * | 8,9 | |
| Y | EP 3 787 181 A1 (HITACHI AUTOMOTIVE SYSTEMS LTD [JP]) 3 mars 2021 (2021-03-03) * alinéa [0017]; figures 1, 8, 13 * * alinéa [0097] – alinéa [0098] * | 10 1 | |
| A | | | |
| Y | WO 2007/051936 A1 (VALEO EQUIP ELECTR MOTEUR [FR]; PIERRET JEAN-MARIE [FR] ET AL.) 10 mai 2007 (2007-05-10) * page 1, ligne 4 – ligne 11; figure 1 * | 10 2-4 | DOMAINES TECHNIQUES RECHERCHES (IPC) H02P |
| A | | | |
| A | US 2004/081438 A1 (HAHN ALEXANDER [DE] ET AL) 29 avril 2004 (2004-04-29) * alinéa [0486] – alinéa [0488] * | 6 | |

Le présent rapport a été établi pour toutes les revendications

| Lieu de la recherche | Date d'achèvement de la recherche | Examinateur |
|---|---|---|
| Munich | 4 novembre 2022 | Roussel, Maxime |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

9

**EP 4 113 823 A1**

## ANNEXE AU RAPPORT DE RECHERCHE EUROPEENNE
## RELATIF A LA DEMANDE DE BREVET EUROPEEN NO.

EP 22 18 2385

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-11-2022

| Document brevet cité au rapport de recherche | | Date de publication | Membre(s) de la famille de brevet(s) | | Date de publication |
|---|---|---|---|---|---|
| JP 5635032 | B2 | 03-12-2014 | CN | 103368477 A | 23-10-2013 |
| | | | JP | 5635032 B2 | 03-12-2014 |
| | | | JP | 2013207973 A | 07-10-2013 |
| FR 2911698 | A1 | 25-07-2008 | FR | 2911698 A1 | 25-07-2008 |
| | | | US | 2009021196 A1 | 22-01-2009 |
| CN 102255529 | A | 23-11-2011 | AUCUN | | |
| EP 3787181 | A1 | 03-03-2021 | CN | 111971892 A | 20-11-2020 |
| | | | EP | 3787181 A1 | 03-03-2021 |
| | | | JP | 7080712 B2 | 06-06-2022 |
| | | | JP | 2019193467 A | 31-10-2019 |
| | | | US | 2021257946 A1 | 19-08-2021 |
| | | | WO | 2019208007 A1 | 31-10-2019 |
| WO 2007051936 | A1 | 10-05-2007 | AT | 447791 T | 15-11-2009 |
| | | | EP | 1943725 A1 | 16-07-2008 |
| | | | FR | 2893142 A1 | 11-05-2007 |
| | | | JP | 2009515497 A | 09-04-2009 |
| | | | US | 2008252284 A1 | 16-10-2008 |
| | | | WO | 2007051936 A1 | 10-05-2007 |
| US 2004081438 | A1 | 29-04-2004 | AT | 408927 T | 15-10-2008 |
| | | | AU | 1385302 A | 13-03-2002 |
| | | | CA | 2421129 A1 | 28-02-2003 |
| | | | DE | 10141125 A1 | 06-06-2002 |
| | | | EP | 1314242 A1 | 28-05-2003 |
| | | | US | 2004081438 A1 | 29-04-2004 |
| | | | WO | 0219512 A1 | 07-03-2002 |

EPO FORM P0460

Pour tout renseignement concernant cette annexe : voir Journal Officiel de l'Office européen des brevets, No.12/82